# EUROPÄISCHE PATENTANMELDUNG

(11) **EP 2 930 404 A1**
(43) Veröffentlichungstag der Anmeldung: **14.10.2015**
(21) Anmeldenummer: 14001273.3
(22) Anmeldetag: 07.04.2014
(51) Int. Cl.: F16J 15/32

(54) **Bürstendichtung**

(71) Anmelder: MTU Aero Engines AG, 80995 München (DE); Siemens Aktiengesellschaft, 80333 München (DE)
(72) Erfinder: Beichl, Stefan, 82211 Herrsching (DE); Deister, Dr. Frank, 47877 Willich (DE); Flegler, Johan, 45131 Essen (DE); Helmis, Thomas, 45472 Mülheim/Rühr (DE); Schmidmayr, Wolfgang, 80539 München (DE)
(74) Vertreter: Maier, Daniel Oliver

(57) **Zusammenfassung**

Die vorliegende Erfindung betrifft eine Bürstendichtung für eine Maschine, vorzugsweise für eine Turbomaschine, insbesondere eine Gas- oder Dampfturbine, wobei die Bürstendichtung einen Grundkörper (3, 4, 6) mit zwei Schenkeln (4, 6) und einem diesen verbindenden Steg (3), eine Bürste (1) zum Abdichten eines Spaltes (2) zwischen zwei benachbarten Bauteilen der Maschine, vorzugsweise zwischen einem rotierenden und einem stehenden Bauteil der Maschine, ein Befestigungsmittel (7) zum, insbesondere reib- und/oder formschlüssigen, Festlegen der Bürste (1) in dem Grundkörper (3, 4, 6), und ein Spannmittel (5) zum bürstenunabhängigen Klemmen der Schenkel (4, 6) in einer Nut (2) der Maschine aufweist.

## Beschreibung

Die vorliegende Erfindung betrifft eine Bürstendichtung für eine Maschine, , vorzugsweise Turbomaschine, insbesondere eine Gas- oder Dampfturbine, mit einer solchen Bürstendichtung sowie ein Verfahren zum Anordnen einer solchen Bürstendichtung in einer solchen Maschine.

Aus der EP 1 890 056 A1 ist eine Bürstendichtung mit einem U-förmigen Blech bekannt, in dem eine Bürste angeordnet ist. Die Bürste kann dabei aus einem Draht gebildet sein, um den herum die Borsten gelegt sind, wobei auf den derart mit Borsten umgebenen Draht eine im Querschnitt betrachtet einen Dreiviertelkreis überdeckende Schale aufgeklemmt ist. Alternativ kann die Bürste aber zum Beispiel auch dadurch gebildet werden, dass Endbereiche der Borsten zwischen zwei Stäben eingeklebt, verschweißt oder eingeklemmt werden. Das Blech wird in eine Nut eingeschoben und in dieser durch die Bürste reibschlüssig geklemmt.

Die Bürste integriert damit die Funktion, sich selbst in dem Blech festzulegen, und die Funktion, das Blech in der Nut zu klemmen.

Ferner ist aus der DE 101 63 804 A1 (siehe Ausführungsform gemäß Fig. 4 und 5) eine ähnliche Bürstendichtung bekannt. Auch bei dieser Bürstendichtung wird die Bürste von einem um einen Kerndraht gelegten und von einer Spannhülse in ausgerichteter Lage gehaltenen Borsten gebildet. Neben der Bürste umfasst auch diese Bürstendichtung ein im Wesentlichen U-förmig ausgebildetes Blech. Zur Montage der Bürstendichtung wird zunächst das U-förmige Blech in eine hinterschnittene Nut eines tragenden Bauteils eingelegt (siehe Fig. 4) und anschließend die Bürste in das U-förmige Blech eingepresst (siehe Fig. 5). Hierdurch verformt sich das U-förmige Blech derart, dass es in der hinterschnittenen Nut form- und kraftschlüssig gehalten wird.

Auch bei der Ausführungsform gemäß der DE 101 63 804 A1 integriert die Bürste damit die Funktion, sich selbst in dem Blech festzulegen, und die Funktion, das Blech in der Nut zu klemmen.

Eine Aufgabe einer Ausführung der vorliegenden Erfindung ist es, eine Bürstendichtung einer Maschine, insbesondere einer Turbomaschine, und/oder deren Montage zu verbessern.

Diese Aufgabe wird durch eine Bürstendichtung mit den Merkmalen des Anspruchs 1 gelöst. Ansprüche 10 und 11 stellen eine Maschine mit einer solchen Bürstendichtung bzw. ein Verfahren zum Anordnen einer solchen Bürstendichtung in einer solchen Maschine unter Schutz. Vorteilhafte Ausführungsformen der Erfindung sind Gegenstand der Unteransprüche.

Nach einem Aspekt der vorliegenden Erfindung weist eine Bürstendichtung für eine Maschine, vorzugsweis für eine Turbomaschine, insbesondere eine Gas- oder Dampfturbine, bzw. eine Bürstendichtung einer Maschine, vorzugsweise einer Turbomaschine, insbesondere einer Gas- oder Dampfturbine, mit zwei benachbarten Bauteilen, vorzugsweise mit einem rotierenden Bauteil und einem stehenden Bauteil, einen Grundkörper mit zwei Schenkeln und einem diesen verbindenden Steg, eine Bürste, die zum Abdichten eines Spaltes zwischen den beiden Bauteilen vorgesehen bzw. eingerichtet ist, insbesondere einen solchen Spalt abdichtet, ein Befestigungsmittel, das zum Festlegen der Bürste in dem Grundkörper vorgesehen bzw. eingerichtet ist, insbesondere die Bürste in dem Grundkörper festlegt, und ein Spannmittel auf, das zum bürstenunabhängigen Klemmen der Schenkel in einer Nut der Maschine vorgesehen bzw. eingerichtet ist, insbesondere die Schenkel in der Nut bürstenunabhängig klemmt.

Hierdurch können in einer Ausführung vorteilhaft die Funktion, die Bürste in dem Grundkörper festzulegen, und die Funktion, den Grundkörper in der Nut zu klemmen, separiert werden.

Dies ermöglicht es in einer Ausführung insbesondere, vorteilhaft zunächst nur den Grundkörper durch das Spannmittel in der Nut zu klemmen und ihn anschließend in situ, insbesondere spanend, zu bearbeiten, insbesondere einen oder beide Schenkel zu kürzen, bevor dann die Bürste durch das Befestigungsmittel in dem Grundkörper festgelegt wird. Auf diese Weise wird die Bearbeitung nicht durch die Bürste erschwert bzw. die Bürste nicht durch die Bearbeitung beeinträchtigt.

Unter einem "bürstenunabhängigen Klemmen" der Schenkel des Grundkörpers wird entsprechend vorliegender Erfindung insbesondere verstanden, dass das Spannmittel die Schenkel nicht nur bei in dem Grundkörper festgelegter Bürste, sondern auch ohne in dem Grundkörper festgelegte Bürste klemmt bzw. hierzu eingerichtet ist. Unter einem Klemmen der Schenkel in der Nut wird vorliegend insbesondere in fachüblicher Weise eine reibschlüssige Befestigung unter elastischem Spreizen der Schenkel gegen die Nut verstanden, wobei nicht ausgeschlossen ist, dass die Schenkel gleichzeitig auch teilweise plastisch verformt werden können.

Unter einer "Bürste" wird entsprechend der vorliegenden Erfindung allgemein eine Anordnung verstanden, bei der eine Vielzahl von Borsten zusammengehalten wird, um eine Einheit bilden. Es kommt dabei im Hinblick auf die vorliegende Erfindung nicht darauf an, wie die Borsten genau zusammengehalten werden. Zu möglichen Ausbildungsformen von Bürsten wird beispielhaft auf die eingangs genannte EP 1 890 056 A1 und DE 101 63 804 A1 verwiesen, deren Offenbarungsgehalt hiermit in die vorliegende Anmeldung aufgenommen wird.

Meistens werden Bürstendichtungen eingesetzt, um einen Spalt zwischen zwei benachbarten Bauteilen abzudichten, die sich relativ zueinander bewegen, wie beispielsweise eine sich drehenden Welle und einem statischen, die Welle zumindest abschnittsweise umgebenden Bauteil. Jedoch können Bürstendichtungen auch zum Abdichten von Spalten zwischen zwei statischen Bauteilen verwendet werden, zum Beispiel dann, wenn große Bauteildehnungen zu kompensieren sind.

Unter "benachbarten Bauteilen" sind hierbei nicht nur separat ausgebildete Bauteile zu verstehen, sondern auch benachbarte Bauteilabschnitte eines einstückig ausgebildeten Bauteils, wobei die benachbarten Bauteilabschnitte über einen abzudichtenden Spalt voneinander getrennt sind.

In einer Ausführung weist das Spannmittel zwei Stirnseiten auf, die zum Kontaktieren einander zugewandter Innenseiten der Schenkel des Grundkörpers vorgesehen bzw. eingerichtet sind, insbesondere diese Innenseiten kontaktieren, wobei diese Stirnseiten derart voneinander beabstandet sind, dass sie (auch) bei bürstenlos zwischen den Innenseiten der Schenkel angeordnetem Spannmittel die Innenseiten auseinanderspreizen und so die Schenkel reibschlüssig in der Nut klemmen. Entsprechend kann in einer Ausführung vorgesehen sein, dass die Stirnseiten mit den Innenseiten (auch bürstenlos) eine Presspassung bilden. Hierdurch kann in einer Ausführung eine besonders vorteilhafte, diametrale Verspreizung bzw. Klemmung dargestellt werden.

In einer Ausführung weist das Spannmittel einen, wenigstens im Wesentlichen, rechteckigen, beispielsweise quadratischen, Querschnitt auf, und zwar vorzugsweise insbesondere in einer Schnittebene orthogonal zu einer Haupterstreckungsrichtung des Spannmittels. Hierdurch können vorteilhaft, wenigstens im Wesentlichen, parallele Stirnseiten und/oder Kontaktflächen zum Steg und/oder der Bürste dargestellt werden.

In einer Ausführung wird bzw. ist das Spannmittel in Einführrichtung des Grundkörpers, d.h. parallel zu dessen Schenkeln auf dessen Steg zu, zwischen dem Steg und dem Befestigungsmittel angeordnet. Hierdurch kann in einer Ausführung das Spannmittel durch die Bürste und/oder das Befestigungsmittel gegen den abzudichtenden Spalt geschützt werden. In einer Weiterbildung wird bzw. ist das Spannmittel in Einführrichtung des Grundkörpers zwischen dem Steg und dem Befestigungsmittel verklemmt. Hierdurch kann es vorteilhaft als Widerlager für eine reibschlüssige Festlegung der Bürste durch das Befestigungsmittel fungieren.

In einer Ausführung ist das Befestigungsmittel zum stoffschlüssigen Festlegen der Bürste in dem Grundkörper vorgesehen bzw. eingerichtet, insbesondere kann die Bürste durch das Befestigungsmittel stoffschlüssig in dem Grundkörper festgelegt werden bzw. sein, insbesondere durch Kleben, Löten oder dergleichen.

Zusätzlich oder alternativ ist das Befestigungsmittel in einer Ausführung zum form-schlüssigen Festlegen der Bürste in dem Grundkörper vorgesehen bzw. eingerichtet, insbesondere kann die Bürste durch das Befestigungsmittel formschlüssig in dem Grundkörper festgelegt werden bzw. sein, insbesondere durch einen Anschlag oder dergleichen.

Zusätzlich oder alternativ ist das Befestigungsmittel in einer Ausführung zum reibschlüssigen Festlegen der Bürste in dem Grundkörper vorgesehen bzw. eingerichtet, insbesondere kann die Bürste durch das Befestigungsmittel reibschlüssig in dem Grundkörper festgelegt, insbesondere geklemmt, werden bzw. sein.

In einer Weiterbildung weist das Befestigungsmittel eine Laschenanordnung mit einer oder mehreren, insbesondere parallelen, Laschen auf, die in einem Schenkel oder beiden Schenkeln ausgebildet und zum, insbesondere form- und/oder reibschlüssigen, Festlegen der Bürste in dem Grundkörper vorgesehen bzw. eingerichtet sind, insbesondere die Bürste in dem Grundkörper, insbesondere form- und/oder reibschlüssig, festlegen, insbesondere klemmen. Hierdurch kann das Befestigungsmittel vorteilhaft integral mit dem Grundkörper ausgebildet werden bzw. sein. In einer Weiterbildung wird bzw. ist die Laschenanordnung durch eine, insbesondere wenigstens im Wesentlichen U-förmige und/oder parallele, Schlitzung in dem Schenkel bzw. den Schenkeln ausgebildet. Hierdurch kann die Laschenanordnung besonders einfach und/oder zuverlässig ausgebildet werden bzw. sein.

In einer Ausführung sind die Schenkel, wenigstens im Wesentlichen, parallel. Zusätzlich oder alternativ können sie die gleiche Länge oder unterschiedliche Längen aufweisen. Insbesondere kann einer der Schenkel als Abstützung der Bürste fungieren und hierzu die in dem Grundkörper festgelegte Bürste kontaktieren, während der andere Schenkel als Strömungsabschirmung der Bürste fungieren und hierzu von der in dem Grundkörper festgelegten Bürste beabstandet sein kann.

In einer Ausführung ist der Steg, wenigstens im Wesentlichen, eben. Hierdurch kann eine in Einführrichtung besonders kompakte Bauform dargestellt werden.

In einer anderen Ausführung ist der Steg, wenigstens im Wesentlichen, zu einem Innenraum des Grundkörpers hin konvex oder konkav, insbesondere abgewinkelt, vorzugsweise W-artig, ausgebildet. Hierdurch kann vorteilhaft zusätzlicher Deformationsweg des Stegs zum Verspreizen der Schenkel zur Verfügung gestellt werden.

Nach einem Aspekt der vorliegenden Erfindung weist die Maschine zwei benachbarte Bauteile, vorzugsweise ein rotierendes Bauteil und ein stehendes Bauteil, und eine hier erläuterte Bürstendichtung auf, die zum Abdichten eines Spaltes zwischen den beiden Bauteilen vorgesehen bzw. eingerichtet ist, insbesondere diesen Spalt abdichtet, wobei der Grundkörper durch das Spannmittel in einer Nut der Maschine bürstenunabhängig festlegbar, insbesondere festgelegt ist.

Die Nut ist in einer Ausführung, wenigstens im Wesentlichen, hinterschneidungsfrei. Hierdurch kann in einer Ausführung die Herstellung der Nut und/oder die (De)Montage der Bürstendichtung vereinfacht werden.

Nach einem Aspekt der vorliegenden Erfindung wird zunächst der Grundkörper durch das Spannmittel in der Nut festgelegt und anschließend die Bürste durch das Befestigungsmittel in dem Grundkörper festgelegt, wobei in einer Ausführung der Grundkörper in situ, insbesondere spanend, bearbeitet wird, nachdem er durch das Spannmittel in der Nut festgelegt worden ist und bevor die Bürste durch das Befestigungsmittel in dem Grundkörper festgelegt wird.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine in einer Nut einer Maschine angeordnete Bürstendichtung gemäß einer Ausführung der vorliegenden Erfindung in einem Querschnitt; und
- Fig. 2: eine perspektivische Ansicht eines Grundkörpers einer Bürstendichtung entweder nach einer weiteren Ausführung der vorliegenden Erfindung oder nach derselben Ausführungsform, jedoch vor dem Verklemmen des Grundkörpers in der Nut durch das Spannmittel.

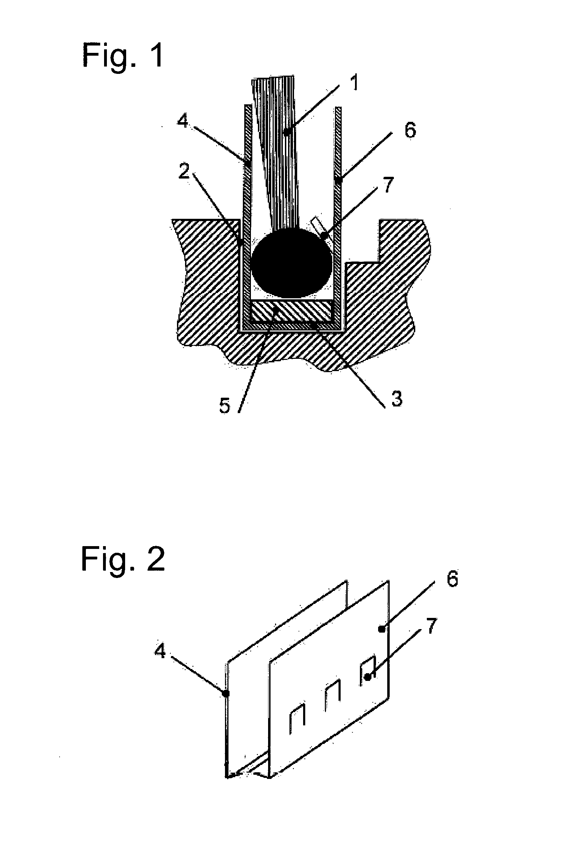

Fig. 1 zeigt eine gemäß einer Ausführung der vorliegenden Erfindung in einer Nut einer Maschine, beispielsweise einer Turbomaschine, angeordnete Bürstendichtung in einem Querschnitt.

Die Bürstendichtung weist einen Grundkörper mit zwei parallelen, gleichlangen Schenkeln 4, 6 und einem diesen verbindenden Steg 3, eine Bürste 1 zum Abdichten eines Spaltes zwischen einem rotierenden und einem stehenden Bauteil der Maschine (nicht dargestellt), ein Befestigungsmittel 7 zum Festlegen der Bürste in dem Grundkörper und ein Spannmittel 5 zum bürstenunabhängigen Klemmen der Schenkel in einer hinterschneidungsfreien Nut 2 der Maschine auf. Die Bürste 1 kann wie bei den eingangs beschriebenen Ausführungsformen gemäß der EP 1 890 056 A1 und der DE 101 63 804 A1 ausgebildet sein, wobei der genaue Aufbau in Fig. 1 der Einfachheit halber, und weil es auf den Aufbau im Hinblick auf die vorliegende Erfindung nicht ankommt, nicht näher dargestellt ist.

Das Spannmittel 5 weist einen in Fig. 1 erkennbaren im Wesentlichen rechteckigen Querschnitt und zwei Stirnseiten (links, rechts in Fig. 1) auf, die einander zugewandte Innenseiten der Schenkel 4, 6 des Grundkörpers kontaktieren, wobei diese Stirnseiten derart voneinander beabstandet sind, dass sie (auch) bei bürstenlos zwischen den Innenseiten der Schenkel angeordnetem Spannmittel die Innenseiten auseinanderspreizen und so die Schenkel reibschlüssig in der Nut 2 klemmen.

Das Spannmittel 5 ist in Einführrichtung des Grundkörpers (von oben nach unten in Fig. 1) zwischen dem Steg 3 und dem Befestigungsmittel 7 angeordnet und zwischen dem Steg 3 und dem Befestigungsmittel 7 verklemmt.

Die Bürste 1 wird durch das Befestigungsmittel 7 reibschlüssig in dem Grundkörper geklemmt. Hierzu weist das Befestigungsmittel eine Laschenanordnung mit mehreren Laschen 7 auf, die in einem Schenkel ausgebildet sind und die Bürste in dem Grundkörper reibschlüssig klemmen. Die Laschenanordnung ist durch eine U-förmige Schlitzung in dem Schenkel ausgebildet, wie insbesondere in Fig. 2 erkennbar.

Der in Fig. 1 linke Schenkel 4 fungiert als Abstützung der Bürste 1 und kontaktiert hierzu die in dem Grundkörper festgelegte Bürste, während der in Fig. 1 rechte Schenkel 6 als Strömungsabschirmung der Bürste fungiert und hierzu von der in dem Grundkörper festgelegten Bürste beabstandet ist.

In der Ausführung der Fig. 1 ist der Steg 3 eben, was entweder dadurch bedingt ist, dass er originär eben ausgeführt worden ist, oder dass er während des Verklemmens des Grundkörpers in der Nut 2 durch das Spannmittel 5 eben gedrückt worden ist. In einer anderen Ausführung oder aber in einem Zustand des Grundkörpers vor dem Verklemmen in der Nut 2 durch das Spannmittel 5 ist der Steg zu einem Innenraum des Grundkörpers hin (oben in Fig. 1) W-artig abgewinkelt. Fig. 2 zeigt hierzu eine perspektivische Ansicht eines Grundkörpers einer Bürstendichtung nach einer solchen anderen Ausführung der vorliegenden Erfindung, die im Übrigen der mit Bezug auf Fig. 1 erläuterten Ausführung entspricht, so dass zu dieser anderen Ausführung auf die Beschreibung der mit Bezug auf Fig. 1 erläuterten Ausführung Bezug genommen wird.

Zunächst wird der Grundkörper durch das Spannmittel 3 in der Nut 2 festgelegt und anschließend die Bürste 1 durch das Befestigungsmittel 7 in dem Grundkörper festgelegt, wobei in einer Ausführung der Grundkörper, insbesondere spanend, bearbeitet wird, nachdem er durch das Spannmittel in der Nut festgelegt worden ist und bevor die Bürste durch das Befestigungsmittel in dem Grundkörper festgelegt wird.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Bürste
- 2: hinterschneidungsfreie Nut
- 3: Steg
- 4: Schenkel
- 5: Spannmittel
- 6: Schenkel
- 7: Lasche(nanordnung) (Befestigungsmittel)

## Patentansprüche

1. Bürstendichtung für eine Maschine, vorzugsweise für eine Turbomaschine, insbesondere eine Gas- oder Dampfturbine, wobei die Bürstendichtung
einen Grundkörper (3, 4, 6) mit zwei Schenkeln (4, 6) und einem diesen verbindenden Steg (3);
eine Bürste (1) zum Abdichten eines Spaltes (2) zwischen zwei benachbarten Bauteilen der Maschine, vorzugsweise zwischen einem rotierenden und einem stehenden Bauteil der Maschine; und
ein Befestigungsmittel (7) zum, insbesondere reib- und/oder formschlüssigen, Festlegen der Bürste (1) in dem Grundkörper (3, 4, 6) aufweist; **gekennzeichnet durch**
ein Spannmittel (5) zum bürstenunabhängigen Klemmen der Schenkel (4, 6) in einer Nut (2) der Maschine.

2. Bürstendichtung nach dem vorhergehenden Anspruch, **dadurch gekennzeichnet, dass** das Spannmittel (5) zwei Stirnseiten zum Kontaktieren einander zugewandter Innenseiten der Schenkel (4, 6) des Grundkörpers (3, 4, 6) aufweist, wobei diese Stirnseiten derart voneinander beabstandet sind, dass sie bei bürstenlos zwischen den Innenseiten der Schenkel (4, 6) angeordnetem Spannmittel (5) die Innenseiten auseinanderspreizen und so die Schenkel (4, 6) in der Nut (2) klemmen.

3. Bürstendichtung nach einem der vorhergehenden Ansprüche, **dadurch gekennzeichnet, dass** das Spannmittel (5) einen, wenigstens im Wesentlichen, rechteckigen, beispielsweise quadratischen, Querschnitt aufweist.

4. Bürstendichtung nach einem der vorhergehenden Ansprüche, **dadurch gekennzeichnet, dass** das Spannmittel (5) in Einführrichtung des Grundkörpers (3, 4, 6) zwischen dem Steg (3) und dem Befestigungsmittel (7) angeordnet, insbesondere verklemmt, ist.

5. Bürstendichtung nach einem der vorhergehenden Ansprüche, **dadurch gekennzeichnet, dass** das Befestigungsmittel (7) eine Laschenanordnung mit wenigstens einer Lasche (7) zum, insbesondere reib- und/oder formschlüssigen, Festlegen der Bürste (1) in dem Grundkörper (3, 4, 6) aufweist, die in einem der Schenkel (4, 6) ausgebildet ist.

6. Bürstendichtung nach dem vorhergehenden Anspruch, **dadurch gekennzeichnet, dass** die Laschenanordnung durch eine, insbesondere wenigstens im Wesentlichen U-förmige, Schlitzung in dem Schenkel (4, 6) ausgebildet ist.

7. Bürstendichtung nach einem der vorhergehenden Ansprüche, **dadurch gekennzeichnet, dass** die Schenkel (4, 6), wenigstens im Wesentlichen, parallel sind und/oder die gleiche oder unterschiedliche Längen aufweisen.

8. Bürstendichtung nach einem der vorhergehenden Ansprüche, **dadurch gekennzeichnet, dass** der Steg (3), wenigstens im Wesentlichen, eben ist.

9. Bürstendichtung nach einem der Ansprüche 1 bis 7, **dadurch gekennzeichnet, dass** der Steg (3), wenigstens im Wesentlichen, zu einem Innenraum des Grundkörpers (3, 4, 6) konvex oder konkav, insbesondere abgewinkelt, ausgebildet ist, wobei der Steg (3) zusammen mit den beiden Schenkeln (4, 6) vorzugsweise eine "W-Form" bildet.

10. Maschine, vorzugsweise Turbomaschine, insbesondere Gas- oder Dampfturbine, mit zwei benachbarten Bauteilen, vorzugsweise einem rotierenden Bauteil und einem stehenden Bauteil, und mit einer Bürstendichtung nach einem der vorhergehenden Ansprüche zum Abdichten eines Spaltes zwischen den beiden Bauteilen, **dadurch gekennzeichnet, dass** der Grundkörper (3, 4, 6) durch das Spannmittel (5) in einer, insbesondere hinterschneidungsfreien, Nut (2) der Maschine bürstenunabhängig festlegbar ist, insbesondere festgelegt ist.

11. Verfahren zum Anordnen der Bürstendichtung in der Nut (2) der Maschine nach dem vorhergehenden Anspruch, **dadurch gekennzeichnet, dass** zunächst der Grundkörper (3, 4, 6) durch das Spannmittel (5) in der Nut (2) festgelegt und anschließend die Bürste (1) durch das Befestigungsmittel (7) in dem Grundkörper (3, 4, 6) festgelegt wird.

12. Verfahren nach dem vorhergehenden Anspruch, **dadurch gekennzeichnet, dass** der Grundkörper (3, 4, 6), insbesondere spanend, bearbeitet wird, nachdem er durch das Spannmittel (5) in der Nut (2) festgelegt worden ist und bevor die Bürste (1) durch das Befestigungsmittel (7) in dem Grundkörper (3, 4, 6) festgelegt wird.
